# EUROPÄISCHE PATENTSCHRIFT

(11) **EP 2 847 014 B1**
(45) Veröffentlichungstag und Bekanntmachung des Hinweises auf die Patenterteilung: **03.04.2019**
(21) Anmeldenummer: 13729589.5
(22) Anmeldetag: 06.05.2013
(51) Int. Cl.: B60J 10/00, B29C 65/00, B62D 65/08

(54) **VERFAHREN ZUR BILDUNG EINER DICHTUNG ODER ABDECKUNG AN EINER ÖFFNUNG EINER FAHRZEUGKAROSSERIE**
METHOD FOR FORMING A SEAL OR COVER ON AN OPENING OF A VEHICLE BODY
PROCÉDÉ DE FORMATION D'UNE GARNITURE D'ÉTANCHÉITÉ OU D'UN RECOUVREMENT SUR UNE OUVERTURE D'UNE CARROSSERIE DE VÉHICULE

(30) Priorität: 08.05.2012 DE 102012104024
(43) Veröffentlichungstag der Anmeldung: 18.03.2015
(73) Patentinhaber: CQLT SaarGummi Technologies S.à.r.l., 5544 Remich (LU)
(72) Erfinder: KAST, Christian, 66683 Merzig-Brotdorf (DE); MICHAELY, Frank, 66687 Wadern-Neukirchen (DE); MORAWSKI, Klaus, 66128 Saarbrücken (DE)
(74) Vertreter: Patentanwälte Bernhardt / Wolff Partnerschaft mbB
(86) Internationale Anmeldenummer: PCT/EP2013/001329
(87) Internationale Veröffentlichungsnummer: WO 2013/167257

(56) Entgegenhaltungen:
- WO-A1-02/076778
- US-A- 4 477 304
- Robatech AG: "Auftragssteuerungen AS zu Klebstoff-Systemen", Muri [CH] , 17. April 2008 (2008-04-17), XP002707707, Gefunden im Internet: URL:http://www.robatech.de/doc/Brochure_Pa tterncontrolAS_de.pdf [gefunden am 2013-07-30]

## Beschreibung

Die Erfindung betrifft ein Verfahren zur Bildung einer Dichtung oder Abdeckung an einer Öffnung einer Fahrzeugkarosserie, bei dem ein extrudierter Strang aus einem Elastomermaterial mit einer den Strang aufnehmenden Trägeroberfläche der Karosserie verklebt und der Trägeroberfläche oder/und einer zu verklebenden Oberfläche des Strangs vor der Verklebung automatisch Klebermaterial zugeführt wird.

Die Herstellung von Dichtungen an Fahrzeugkarosserien durch Verkleben von Elastomersträngen mit einer Trägeroberfläche der Karosserie ist z.B. aus der WO 02/076 778 A1 bekannt. Zur Verklebung mit dem Elastomermaterialstrang wird mit Hilfe einer Auftragseinrichtung während der Zuführung des Strangs als Endlosstrang Klebermaterial auf die Trägeroberfläche aufgetragen. Bei konstantem Materialstrom der Zufuhr kann die Klebeverbindung zwischen dem Elastomermaterialstrang und der Trägeroberfläche beeinträchtigt sein.

Der Erfindung liegt die Aufgabe zugrunde, ein neues Verfahren der eingangs erwähnten Art zu schaffen, bei dem sich eine höhere Sicherheit der Verbindung zwischen Strang und Trägeroberfläche erreichen lässt.

Das diese Aufgabe lösende Verfahren nach der Erfindung ist dadurch gekennzeichnet, dass die Zufuhrmenge an Klebermaterial entsprechend einem sich in Längsrichtung der Trägeroberfläche ändernden, auf die Stranglänge bezogenen Bedarfes an Klebermaterialmenge oder/und entsprechend einer sich in Längsrichtung der Trägeroberfläche ändernden Anordnung der zu verklebenden Oberfläche des Strangs auf dem Strang gesteuert wird, wobei die Steuerung der Zufuhrmenge (1) anhand von Signalen eines die Trägerobefläche (3) erfassenden Sensors (7) oder/und gespeicherten Zusammenhang zwischen dem Zufuhrmengenbedarf und der Wegposition entlang der Trägeroberfläche (3) erfolgt.

Die Erfindung beruht auf der Erkenntnis, dass sich bei konstanter Zufuhr an Klebermaterial eine sichere Verbindung zwischen Elastomermaterialstrang und Trägeroberfläche nicht erreichen lässt, sofern in Längs- oder/und Querrichtung der Trägeroberfläche Variationen der Zufuhrmenge an Klebermaterial erforderlich sind. Insbesondere kann sich der Mengenbedarf an Klebermaterial infolge von Vertiefungen, Erhebungen oder/und Absätzen in der Trägeroberfläche ändern. Vertiefungen ergeben sich insbesondere an Punktschweißverbindungen zwischen Blechlagen. Absätze entstehen z.B. dort, wo sich Blechlagen der Karosserie überlappen, Erhebungen z.B. an Nietverbindungen. Variationen der Zufuhr einschließlich Zufuhrmenge an Klebermaterial können auch dadurch notwendig werden, dass sich Lage und Breite der Klebefläche auf dem Strang in dessen Längsrichtung z.B. abschnittsweise ändern.

Vorzugsweise wird pastöses, aufgrund einer gewissen Formbeständigkeit zur Ausfüllung von Hohlräumen unter dem Strang geeignetes Klebermaterial zugeführt.

Zweckmäßig wird der Strang in seiner Längsrichtung fortlaufend mit der Trägeroberfläche verklebt und insbesondere auf die Trägeroberfläche aufgerollt, wobei der Strang vorzugsweise als endloser Strang zugeführt wird.

Die Viskosität des pastösen Klebermaterials und die Anpresskraft durch eine den Strang applizierende Einrichtung können so aufeinander abgestimmt sein, dass sich das Klebermaterial unter dem Strang zwischen Strang und Trägeroberfläche optimal verteilt.

Die Klebermaterialzufuhr erfolgt vorzugsweise mit Hilfe einer Zuführeinrichtung, die sich, ggf. synchron, mit dem fortlaufenden Verklebungsbereich des Stranges mitbewegt. Alternativ kann eine feststehende, z.B. Klebermaterial nur dem Strang zuführende Einrichtung vorgesehen sein.

Die Steuerung der Zufuhrmenge lässt sich erfindungsgemäß anhand von Signalen eines die Trägerfläche optisch erfassenden Sensors steuern. Alternativ oder zusätzlich wäre auch eine Steuerung anhand eines gespeicherten Zusammenhangs zwischen dem Zufuhrmengenbedarf und der Wegposition entlang der Trägeroberfläche möglich.

Während, wie bereits erwähnt, sich eine Verteilung des Klebermaterials unter dem Strang durch Andrücken des Strangs gegen die Trägeroberfläche von selbst ergebern könnte, ließe sich eine entsprechende Ausbreitung des zugeführten Klebermaterials auf der Trägeroberfläche oder/und dem Strang auch vor dem Aufbringen des Strangs auf die Trägeroberfläche durchführen.
In dem Strang können zur Trägeroberfläche hin offene Hohlräume (Flutrillen) für die Aufnahme überschüssigen Klebermaterials gebildet werden.

Bei der Trägeroberfläche handelt es sich vorzugsweise um eine am Rand einer Fahrzeugtür, einer Fahrzeugtüröffnung oder anderer Karosserieöffnung oder -klappe umlaufende Oberfläche, die einen Dichtungsstrang für die Bildung einer Tür- bzw. Karosseriedichtung aufnimmt.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: eine das Prinzip des Kleberverfahrens nach der Erfindung erläuternde Darstellung,
- Fig. 2: eine Trägeroberfläche für die Aufnahme eines Dichtungsstrangs mit einer in der Trägeroberfläche gebildeten Erhebung einer Vertiefung und einem in der Trägeroberfläche gebildeten Absatz,
- Fig. 3: eine die Klebermaterialzufuhr bei dem erfindungsgemäßen Verfahren erläuternde Darstellung, und
- Fig. 4: einen nach dem erfindungsgemäßen Verfahren mit einem Karosserieblech verbundenen Dichtungsstrang.

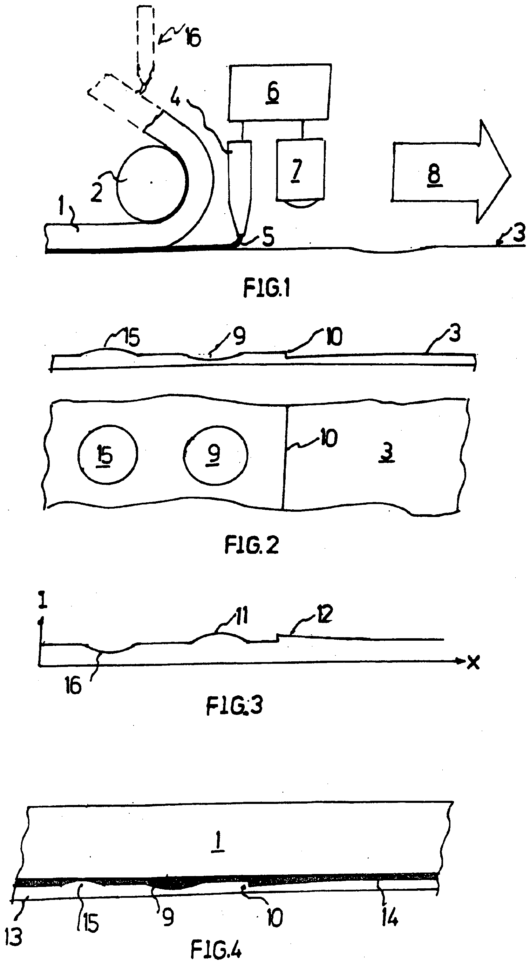

Fig. 1 zeigt schematisch einen extrudierten Dichtungsstrang 1, der mit Hilfe einer eine Rolle 2 umfassenden, im übrigen nicht dargestellten Rollapplikationseinrichtung auf eine Trägeroberfläche 3 einer Fahrzeugkarosserie aufgebracht wird. Die Trägeroberfläche kann z.B. eine Fläche sein, die am Rand einer Fahrzeugtür oder Fahrzeugtüröffnung umläuft und einen Dichtungsstrang für die Bildung einer Türdichtung aufnimmt. Alternativ zu der Rolle 2 käme auch ein Gleitschuh in Betracht.

Eine Einrichtung 4 für die Zuführung von pastösem Klebermaterial 5 ist mit einer die Zufuhrmenge an Klebermaterial steuernden Einrichtung 6 verbunden. Die Steuereinrichtung 6 steht ferner in Verbindung mit einem Sensor 7, der die Trägeroberfläche 3 möglichst berührungslos, ggf. optisch, erfasst. Die Zuführeinrichtung 4 und der Sensor 7 bewegen sich vorzugsweise synchron mit der Rolle 2 der Rollapplikationseinrichtung in Richtung des Pfeils 8. Die Zuführeinrichtung 4 und/oder der Sensor 7 können baulich mit der Rollapplikationseinrichtung verbunden sein. Wie durch Strichlinien angedeutet ist, könnte die Zuführeinrichtung auch z.B. bei 16 feststehend angeordnet und zum Klebermaterialauftrag auf den Strang 1 vorgesehen sein. Abweichend von dem gezeigten Beispiel könnte der Kleberauftrag in größerem zeitlichen und räumlichen Abstand vor der Verklebung erfolgen, so das der aufgetragene Kleber zwischenzeitlich ablüften kann.

Wie Fig. 2 beispielhaft zeigt, können sich in der den Dichtungsstrang 1 aufnehmenden Trägeroberfläche 3 der Fahrzeugkarosserie Vertiefungen 9, Erhebungen 15 oder/und Absätze 10 befinden. Vertiefungen 9 bilden sich z.B. an Punktschweißstellen, an denen mehrere Blechlagen miteinander verbunden sind, Erhebungen z.B. an Nietverbindungen. Absätze 10 ergeben sich z.B. an Überlappungen zweier Blechlagen. Durch die genannten Vertiefungen, Erhebungen oder/und Absätze gebildete Hohlräume unter dem Dichtungsstrang beeinträchtigen dessen Verklebung mit der Trägeroberfläche 3.

Zur Vermeidung solcher Beeinträchtigungen wird die durch die Zuführeinrichtung 4 geförderte Zufuhrmenge an Klebermaterial 5 mit Hilfe der Einrichtung 6 so gesteuert, dass es im Bereich von Erhebungen 15, Vertiefungen 9 oder/und Absätzen 10 weder zu einer ungewollt starken Krümmung des Dichtungsstrangs 1 noch zu einer Hohlraumbildung unter dem Dichtungsstrang kommt. In den betreffenden Bereichen wird die Zufuhrmenge an Klebermaterial 5 vorübergehend in solchem Maße geändert, dass bei kaum beeinflusstem Verlauf des Dichtungsstrangs 1 an einer Erhebung Klebermaterialüberschüsse unter dem Dichtungsstrang vermieden und bei einer Vertiefung oder einem Absatz unter dem Dichtungsstrang 1 gebildete Hohlräume möglichst vollständig durch das Klebermaterial 5 ausgefüllt werden. Die Viskosität des pastösen Klebermaterials 5 und die Andruckkraft durch die Rolle 2 der Rollapplikationseinrichtung sind so aufeinander abgestimmt, dass Unebenheiten weitestgehend ausgeglichen sind.

Fig. 3 zeigt den Materialstrom I des Klebermaterials aufgetragen über der Wegposition x entlang der Trägeroberfläche 3. Wie zu sehen ist, steigt im Bereich der Vertiefung 9 der Materialstrom I an, ebenso im Bereich des Absatzes 10. Der der Rollapplikationseinrichtung vorgelagerte, vorzugsweise synchron mitbewegte Sensor 7 erfasst vorzugsweise berührungslos die Trägeroberfläche 3 und übermittelt Steuersignale an die Steuereinrichtung 6. Die Steuereinrichtung 6 steuert die Zufuhr durch die Zuführeinrichtung 4 derart, dass sich im Bereich der Vertiefung 9 und des Absatzes 10 die in Fig. 3 gezeigten Kurvenverläufe 16, 11 und 12 ergeben.

Fig. 4 zeigt den mit Karosserieblech 13 verklebten Dichtungsstrang 1. Eine durch das Klebermaterial 5 gebildete Verbindungsschicht 14 zwischen Dichtungsstrang und Karosserieblech weist abseits des Erhebungs- und Vertiefungs- bzw. Absatzbereichs gemäß der Kurve von Fig. 3 eine konstante Dicke auf. In den betreffenden Bereichen ist die Verbindungsschicht 14 entsprechend der verminderten bzw. erhöhten Materialzufuhr verdünnt oder verdickt und die Bildung die Verbindung beeinträchtigender Klebermaterialüberschüsse oder Hohlräume vermieden. Der Dichtungsstrang 1 weist keine nennenswerte, durch die Erhebung 15, die Vertiefung 9 oder den Absatz 10 bewirkte Krümmung auf.

## Patentansprüche

1. Verfahren zur Bildung einer Dichtung oder Abdeckung an einer Öffnung einer Fahrzeugkarosserie, bei dem ein extrudierter Strang (1) aus einem Elastomermaterial mit einer den Strang (1) aufnehmenden Trägeroberfläche (3) der Karosserie verklebt und der Trägeroberfläche (3) oder/und einer zu verklebenden Oberfläche des Strangs (1) vor der Verklebung automatisch Klebermaterial (5) zugeführt wird,
**dadurch gekennzeichnet,**
**dass** die Zufuhr an Klebermaterial (5) entsprechend einem sich in Längsrichtung der Trägeroberfläche (3) ändernden, auf die Stranglänge bezogenen Bedarf an Klebermaterialmenge oder/und entsprechend einer sich in Längsrichtung der Trägeroberfläche ändernden Anordnung der zu verklebenden Oberfläche des Strangs (1) auf dem Strang (1) gesteuert wird, wobei die Steuerung der Zufuhrmenge (1) anhand von Signalen eines die Trägeroberfläche (3) erfassenden Sensors (7) oder/und gespeicherten Zusammenhang zwischen dem Zufuhrmengenbedarf und der Wegposition entlang der Trägeroberfläche (3) erfolgt.

2. Verfahren nach Anspruch 1,
**dadurch gekennzeichnet,**
**dass** sich der Bedarf an zuzuführender Klebermaterialmenge in Folge einer Vertiefung (9), Erhebung (15) oder/und eines Absatzes (10) in der Trägeroberfläche (3) ändert.

3. Verfahren nach Anspruch 1 oder 2,
**dadurch gekennzeichnet,**
**dass** pastöses, Unebenheiten unter dem Strang (1) ausgleichendes Klebermaterial (5) zugeführt wird.

4. Verfahren nach einem der Ansprüche 1 bis 3,
**dadurch gekennzeichnet,**
**dass** der, insbesondere als Endlosstrang zugeführte, Strang (1) in seiner Längsrichtung fortlaufend mit der Trägeroberfläche (3) verklebt und insbesondere auf die Trägeroberfläche (3) aufgerollt wird.

5. Verfahren nach Anspruch 4,
**dadurch gekennzeichnet,**
**dass** die automatische Klebermaterialzufuhr mit Hilfe einer entsprechend in der fortlaufenden Verklebung des Strangs (1) bewegten oder einer von der Verklebung unabhängig arbeitenden Zuführeinrichtung (4) erfolgt.

6. Verfahren nach einem der Ansprüche 1 bis 5,
**dadurch gekennzeichnet,**
**dass** die Steuerung der Zufuhrmenge (I) anhand von Signalen eines die Trägeroberfläche (3) berührungslos erfassenden Sensors (7) erfolgt.

7. Verfahren nach einem der Ansprüche 1 bis 6,
**dadurch gekennzeichnet,**
**dass** eine Änderung der Zufuhrmenge (I) entsprechend dem Volumen eines auszufüllenden Hohlraums und/oder einer durch eine Applikationseinrichtung ausgeübten Andruckkraft auf den Strang (1) gewählt wird.

8. Verfahren nach einem der Ansprüche 1 bis 7,
**dadurch gekennzeichnet,**
**dass** in dem Strang (1) zur Trägeroberfläche (3) hin offene Hohlräume für die Aufnahme überschüssigen Klebermaterials (5) gebildet werden.

9. Verfahren nach einem der Ansprüche 1 bis 8,
**dadurch gekennzeichnet,**
**dass** eine Ausbreitung des zugeführten Klebermaterials (5) auf der Trägeroberfläche (3) oder/und dem Strang (1) vor dessen Applikation auf die Trägeroberfläche (3) erfolgt.

10. Verfahren nach einem der Ansprüche 1 bis 9,
**dadurch gekennzeichnet,**
**dass** die Trägeroberfläche (3) am Rand einer Fahrzeugtür, Türöffnung oder anderen Karosserieklappen oder -öffnungen umläuft.

## Claims

1. Method for forming a seal or cover on an opening of a vehicle body, in which an extruded strand (1) made of an elastomer material is adhesively bonded to a support surface (3) of the body receiving the strand (1), and, before the adhesive bonding, the support surface (3) or/and a surface to be adhesively bonded of the strand (1) is automatically supplied with adhesive material (5),
**characterized in that**
the supply of adhesive material (5) is controlled in accordance with a requirement for the amount of adhesive material that changes in the longitudinal direction of the support surface (3) and is related to the strand length, or/and in accordance with an arrangement of the surface to be adhesively bonded of the strand (1) on the strand (1) that changes in the longitudinal direction of the support surface, the control of the amount supplied (1) taking place on the basis of signals of a sensor (7) sensing the support surface (3) or/and a stored relationship between the requirement for the amount supplied and the position on the path along the support surface (3) .

2. Method according to Claim 1,
**characterized**
**in that** the requirement for the amount of adhesive material to be supplied changes as a result of a depression (9), an elevation (15) or/and a step (10) in the support surface (3).

3. Method according to Claim 1 or 2,
**characterized**
**in that** pasty adhesive material (5) that compensates for unevennesses under the strand (1) is applied.

4. Method according to one of Claims 1 to 3,
**characterized**
**in that** the strand (1), supplied in particular as an endless strand, is adhesively bonded to the support surface (3) continuously in its longitudinal direction and in particular is rolled onto the support surface (3).

5. Method according to Claim 4,
**characterized**
**in that** the automatic supply of adhesive material takes place with the aid of a supply device (4) moved in accordance with the continuous adhesive bonding of the strand (1) or operating independently of the adhesive bonding.

6. Method according to one of Claims 1 to 5,
**characterized**
**in that** the control of the amount supplied (I) takes place on the basis of signals of a sensor (7) contactlessly sensing the support surface (3).

7. Method according to one of Claims 1 to 6,
**characterized**
**in that** a change in the amount supplied (I) is chosen in accordance with the volume of a cavity to be filled and/or a pressing force on the strand (1) exerted by an application device.

8. Method according to one of Claims 1 to 7,
**characterized**
**in that** cavities that are open towards the support surface (3) and are intended for receiving excess adhesive material (5) are formed in the strand (1).

9. Method according to one of Claims 1 to 8,
**characterized**
**in that** a spreading of the supplied adhesive material (5) on the support surface (3) or/and the strand (1) takes place before application of the latter to the support surface (3).

10. Method according to one of Claims 1 to 9,
**characterized**
**in that** the support surface (3) runs around the edge of a vehicle door, door opening or other hatches or openings of the body.

## Revendications

1. Procédé pour la formation d'une garniture d'étanchéité ou d'un recouvrement sur une ouverture d'une carrosserie de véhicule, dans lequel un brin extrudé (1) en un matériau élastomère est collé sur une surface support (3), recevant le brin (1), de la carrosserie et la surface support (3) et/ou une surface à coller du brin (1) est alimentée automatiquement, avant le collage, en matière adhésive (5), **caractérisé en ce que** l'alimentation en matière adhésive (5) est régulée sur le brin (1) en fonction d'un besoin en quantité de matière adhésive, qui se modifie dans la direction longitudinale de la surface support (3) et qui se rapporte à la longueur du brin, et/ou en fonction d'une disposition de la surface à coller du brin (1), qui se modifie dans la direction longitudinale de la surface support, la régulation de la quantité alimentée (1) ayant lieu à l'aide de signaux d'un capteur (7) détectant la surface support (3) et/ou d'une relation enregistrée entre le besoin en quantité alimentée et la position du trajet le long de la surface support (3).

2. Procédé selon la revendication 1, **caractérisé en ce que** le besoin en quantité de matière adhésive à alimenter se modifie suite à un creux (9), à une élévation (15) et/ou à un épaulement (10) dans la surface support (3).

3. Procédé selon la revendication 1 ou 2, **caractérisé en ce qu'**une matière adhésive (5) pâteuse, compensant les irrégularités sous le brin (1) est alimentée.

4. Procédé selon l'une quelconque des revendications 1 à 3, **caractérisé en ce que** le brin (1), en particulier alimenté sous forme de brin continu, est collé en continu sur la surface support (3) dans sa direction longitudinale et en particulier déroulé sur la surface support (3).

5. Procédé selon la revendication 4, **caractérisé en ce que** l'alimentation automatique en matière adhésive a lieu à l'aide d'un dispositif d'alimentation (4) déplacé en fonction du collage continu du brin (1) ou fonctionnant indépendamment du collage.

6. Procédé selon l'une quelconque des revendications 1 à 5, **caractérisé en ce que** la régulation de la quantité alimentée (1) a lieu à l'aide de signaux d'un capteur (7) détectant la surface support (3) sans contact.

7. Procédé selon l'une quelconque des revendications 1 à 6, **caractérisé en ce qu'**une modification de la quantité alimentée (1) est choisie en fonction du volume d'un espace creux à remplir et/ou d'une force de compression exercée sur le brin (1) par un dispositif d'application.

8. Procédé selon l'une quelconque des revendications 1 à 7, **caractérisé en ce que** des espaces creux, ouverts vers la surface support (3) et destinés à recevoir de la matière adhésive (5) en excès, sont formés dans le brin (1).

9. Procédé selon l'une quelconque des revendications 1 à 8, **caractérisé en ce qu'**un élargissement de la matière adhésive (5) alimentée sur la surface support (3) et/ou sur le brin (1) a lieu avant son application sur la surface support (3).

10. Procédé selon l'une quelconque des revendications 1 à 9, **caractérisé en ce que** la surface support (3) s'étend autour du bord d'une porte de véhicule, d'une ouverture de porte ou d'autres clapets ou ouvertures de carrosserie.
